# EUROPEAN PATENT SPECIFICATION

(11) **EP 2 179 654 B1**
(45) Date of publication and mention of the grant of the patent: **25.04.2018**
(21) Application number: 09013470.1
(22) Date of filing: 26.10.2009
(51) Int. Cl.: A21B 1/48

(54) **Apparatus for continuous baking food products**
Vorrichtung zum kontinuierlichen Backen von Backwaren
Appareil de cuisson continue de produits alimentaires

(30) Priority: 27.10.2008 IT VR20080119
(43) Date of publication of application: 28.04.2010
(73) Proprietor: Iteca S.p.A., 37050 Palù (VR) (IT)
(72) Inventor: Benetti, Luigi, 37131 Verona (IT); Stefanelli, Pietro, 37039 Tregnago (Verona) (IT)
(74) Representative: Autuori, Angelo

(56) References cited:
- EP-A1- 0 482 255
- WO-A1-00/42869
- WO-A2-01/16537
- FR-A- 975 566
- US-A- 4 244 285
- US-A- 5 299 557
- US-A1- 2004 244 400
- US-A1- 2007 169 630

## Description

### Field of the invention

The present invention finds application in the technical field of the food industry, and particularly relates to an apparatus for baking in continuous food products, such as panettone, pandoro, bread or the like.

### Background Art

It is known that, in the industrial production of food products, such as panettone, pandoro, bread or the like, continuous processing lines are used, in which conveying systems convey the product from the kneading to the rising, the filling, the baking, until the packaging.

In particular, in these lines the baking step is carried out by means of so-called "tunnel" ovens which, generally, comprise an inlet for the food products to be baked, a plurality of baking chambers, an outlet for the baked food products and means for conveying the food products from the inlet to the outlet, usually constituted by one or more conveyer belts.

In the various baking rooms, heating from the top and the bottom thereof bakes the product. The baking chambers are disposed in sequence, so as to form the so-called zones of the oven, in which the temperature is independent in order to define the so-called baking diagram of the product. As a consequence, the tunnel ovens are extremely elongated along the baking direction, usually twenty or thirty meters.

On the other hand, in order to thermally insulate the oven, insulating covers, consisting of one or more panels glued or anyway contacted on the external surface thereof, are generally used, particularly in correspondence of the baking chambers and the conveyor belts, so as to completely cover the oven for all the length thereof, excluding the load and unload zones.

An oven of this type, although providing an optimal baking of the product, is very difficult to cleaning and maintaining.

In fact, with the use, fat substances, sugars, dough or filling pieces, flour and several impurities settle on the oven, in particular in correspondence of the baking chambers and the product's conveying system.

Such deposits cause an insufficient hygiene of the oven, besides the risk of contamination of the product during baking. Moreover, jamming and malfunctions of the product conveying system are possible.

Further, there is an high fire danger, because of the inflammability of these deposits. Another danger is the flour, which may burst.

Moreover, if the products are put on trays for the baking, there is a further drawback. In fact, in case of jamming inside the baking chambers, the releasing thereof is very difficult.

Since the operations of cleaning, sanification, maintenance or releasing of jamming or anyway obstacles to the products flow unavoidably cause the stopping and the subsequent starting of the oven, the productivity thereof is necessarily low.

Because of the above drawbacks, another problem of the known ovens is the fact that they cannot exceed predetermined lengths, usually twenty or thirty meters. In case of need of a greater baking length, two or more known ovens are juxtaposed, with problems of management thereof.

From US5299557 a baking apparatus with a conveyor oven enclosure system is known. EP 0482255 A1 describes a convection tunnel oven with modules joined to form a single long continuous cooking chamber.

FR975566 describes a further device for heating or cooling food products having a walkway for providing maintenance to a conveyor. From US2004/244400 a helical impingement cooling and heating apparatus is known.

### Summary of the invention

The main object of this invention is to overcome the above drawbacks, by providing an apparatus for baking in continuous food products that is highly efficient and relatively cost-effective.

A particular object is to provide an apparatus for baking in continuous food products having a very high productive efficiency.

Another object is to provide an apparatus for baking in continuous food products that allows an easy and effective cleaning and maintenance.

Further object is to provide an apparatus for baking in continuous food products that allows a simple, quick and/or easy access to the inner mechanical parts in order to execute a timely maintenance.

Another object is to provide an apparatus for baking in continuous food products that allow a quick and/or easy access to the baking chambers for cleaning, maintenance and/or releasing of jamming and/or obstacles.

Further object is to provide an apparatus for baking in continuous food products that can be manufactured in any length.

Such objects, as well as other objects that will become apparent hereinafter, are fulfilled by an apparatus for baking in continuous food products according to claim 1, which comprises an oven of the tunnel type for baking in continuous the food products and means for the thermal insulation thereof.

The tunnel oven includes an inlet for the food products to be baked, a plurality of baking chambers, an outlet for the baked food products and means for conveying the food products from the inlet to the outlet thereof.

The insulation means may comprise means for the access, preferably lateral, to the chambers of the oven and/or to the product conveying means.

Such means may be shaped and/or sized in such a manner to allow the access, preferably lateral, of a operator inside the baking chambers. As an example, on the sidewalls of the baking chambers removable doors can be provided for the passage of the operator.

Advantageous embodiments of the invention are defined in accordance with the dependent claims.

### Brief description of the drawings

Further features and advantages of the invention will be more apparent upon reading the detailed description of a preferred, non-exclusive embodiment of an apparatus according to the invention, which is described as a non-limiting example with the help of the annexed drawings, in which:
**FIG. 1** is a side view with partial section of the apparatus according to the invention;
**FIG. 2** is a top view with partial section of the apparatus according to the invention.

### Detailed description of a preferred example of realization

With reference to the cited figures, the apparatus according to the invention, generally indicated with number 1, is particularly designed for the baking of food dough products **P** of the type panettone, pandoro, bread or the like.

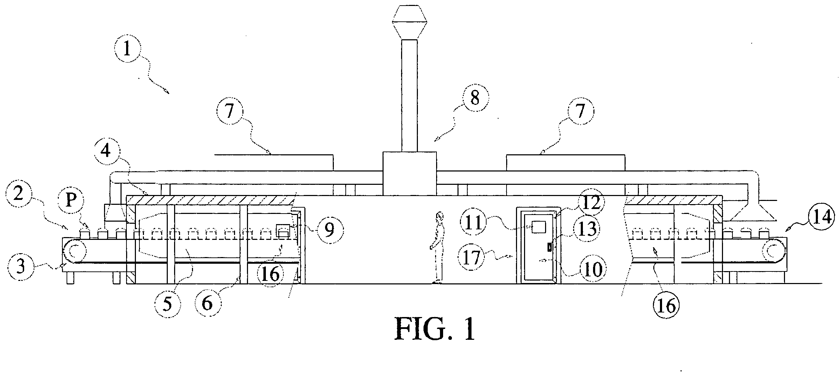

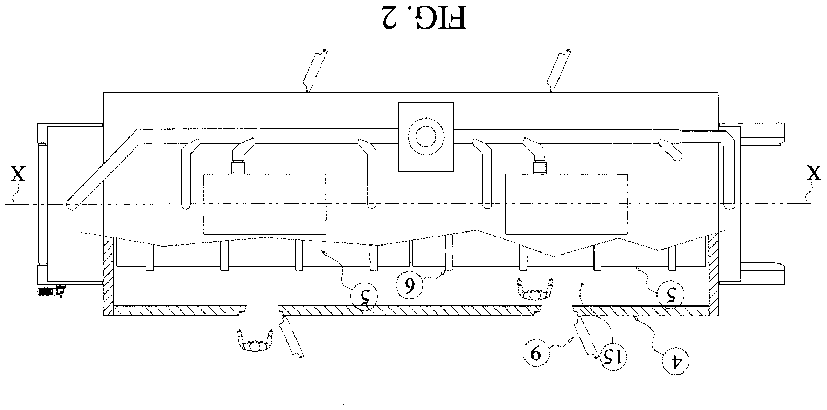

As shown in figures 1 and 2, the apparatus **1** comprises a oven of the tunnel type for the continuous baking, which is elongated along the longitudinal direction **X**, and may comprise an inlet loading zone **2** of the product **P** to be baked, an outlet unloading zone thereof **14**, one or more conveyor belts **3** moved by motor means **16** that convey the product through the oven from the loading zone **2** to the unloading one **14**, two or more baking chambers **5**, a support structure **6** for supporting the baking chambers and the conveyor belts, two thermal modules **7** for the generation of the baking heat, a vapour suction system **8** for sucking the baking vapours and the exhaust gases of the thermal modules. According to the baking diagram set up, to the outlet **14** will arrive food products **P** more or less baked.

Thermal insulation means are also provided for insulating the oven, which includes a box-like insulating structure **4** placed externally to the oven for thermally insulating thereof. In particular, the box-like structure **4** will thermally insulate from the external environment the baking chambers **5** and the means for conveying the product **P** through thereof, essentially the conveyor belt the **3** and motor means **16**. The latter may comprise a plurality of belts, chains, rollers and like motor means, placed internally to the structure **4.**

The motor means **16** may be driven by one or more driving engines, placed externally to the structure **4**.

The box-like structure **4** includes means for allowing the access of one or more operators or workers to the baking chambers **5** and/or to the conveying means **3**, **16** for the cleaning and/or the maintenance thereof.

In this manner, it is possible to clean up and/or to sanify easily, comfortably and quickly such members, or however operate thereon for maintenance and/or the removal of obstacles and/or jamming that would prevent a right flowing of the products from the inlet to the outlet of the oven.

Moreover, thanks to such characteristics, the productive efficiency of the oven, in terms of products baked for unit time, is dramatically improved with respect to the apparatuses of the prior art, since the above operations can be made while the same oven is working, without necessity to stopping and to restarting thereof.

Further, thanks to the great versatility, the oven according to the invention can be manufactured lengthways along **X** longer than the ovens of the prior art, and thereby reaching 80 - 90 meters in length, or more.

Preferably, the baking chambers **5** and/or the conveying means **3**, **16** may be laterally accessible by the operator, thus greatly facilitating the above mentioned operations.

On the other hand, the baking chambers **5** may have at least one openable and/or removable door, preferably laterally positioned, for the access of the operator thereinside. Such door may have dimensions sufficient to the passing through of the operator, which may thus access inside the chambers **5**, e.g. for an effectively and comfortably cleaning up thereof or for releasing one or more jammed trays or an obstacle.

The accessing means to the baking chambers **5** and/or to the conveying means **3**, **16** comprise at least one first side wall of the box-like structure **4** faced to the oven and spaced apart therefrom in order to define a first interspace **15** therebetween.

Advantageously, the first interspace **15** is accessible from the outside from the operator, so as to especially facilitate the operations of cleaning and/or maintenance of the baking chambers **5** and/or the conveying means **3**, **16**.

Moreover, the air present into the interspace **15** is an insulating means and contributes to thermally insulate the oven from the external environment. The apparatus according to the invention, therefore, is thermally more efficient with respect to the ovens of the prior art. Further, the unavoidable deposits of fat substances and carbohydrates which adhere to the internal surface of the box-like structure **4** increase the insulating properties thereof.

Further, the interspace **15** is particularly advantageous in case of need to quickly stopping the oven, since the air present therein contribute to shorten the cooling time of the oven.

Advantageously, the means for accessing to the baking chambers **5** and/or to the conveying means **3**, **16** may comprise one or more openings **17** in the first side wall. Suitably, the opening **17** may be shaped and/or sized to allow the passage of the operator theretrough and to allow the access thereof to first interspace **15** from the outside of the box-like structure **4**.

Each opening **17** may comprise an access door **10**, which may be also thermally insulated. Each door **10** may be provided with a handle **13** and with an emergency lock **12** in order to maintain the doors in closing position during the baking.

The emergency locks **12** may be commandable by a special key exclusively held by the oven's cleaning and maintenance operating staff, in such a manner to avoid the accidental entrance of strangers inside of the apparatus **1** during the baking.

Advantageously, the doors **10** may be provided with an inspection window **11** that allow the monitoring the product inside of the oven, thanks to a suitable opening **9** made on the baking chamber **5** in correspondence of the inspection window.

In a preferred but not exclusive embodiment, the doors **10** may be free of steps or obstacles in order to facilitate the entrance of operators and to simplify the cleaning operations.

As particularly visible in FIG. 2, the first side wall is sufficiently spaced apart from the oven to allow the access and the movement in the first interspace **15** of the operator.

In other words, the dimensions of the interspace **15** are such that it defines a lateral corridor or passage for accessing to the baking chambers **5** and/or to the means **3**, **16** which convey the products **P**.

In this manner, the operator is free to move and to walk into the interspace **15**, in such a manner to facilitate its action.

Advantageously, the first side wall may have a distance from the oven comprised between 35 cm and 150 cm, preferably comprised between 40 cm and 100 cm and still more preferably comprised between 50 cm and 80 cm. Such dimensions will allow the operator to easily move into the interspace **15**.

In a preferred but not exclusive embodiment, the box-like structure **4** may have a second side wall, opposite to the first one, faced to the oven and spaced apart therefrom to define a second interspace therebetween, which may have one or more of the characteristics of the first interspace **15**.

Suitably, the second interspace also may be accessible from the outside by an operator for the cleaning and/or the maintenance of the baking chambers **5** and/or the conveying means **3**, **16**.

Thanks to this embodiment of the apparatus **1**, the baking chambers **5** and/or the conveying means **3**, **16** are accessible from both sides of the oven, so as to facilitate and to speed up the action of one or more workers.

In a preferred but not exclusive embodiment, the insulating box-like structure **4** may comprise a support frame, e.g. consisting of a plurality of reversed U-shaped elements, anchored to the ground, on which a plurality of insulating panels may be bound. Both the supporting elements and the insulating panels may be of the type known *per se*, and may be chosen according to the desired dimensions of the box-like insulating structure **4**.

Moreover, the box-like structure **4** may have an inlet downwardly placed with respect to the inlet **2** of said oven and an outlet upwardly placed with respect to the outlet **14** of said oven along the conveying direction **X** of the food products **P**.

Therefore, the loading and unloading of the latter from the outside of the box-like structure **4** is allowed, in such a manner that such operations can be carried out by apparatuses known *per se* and not specially manufactured with high temperature-resistant materials or by normally equipped operators and not provided with special high temperature-resistant covers.

In fact, relatively high temperatures are reached into the oven during baking, e.g. 180 °C - 230 °C during the baking of panettone so that the access inside of the box-like structure **4**, respectively into the interspace **15**, during baking may need the use of special covers, of the type known *per se.*

Since the temperature is higher into the high zone of the oven, the pavement of the ambient in which apparatus **1** is installed may advantageously be used, if suitable, for thermally insulating the bottom of apparatus. The thermally insulating box-like structure **4** may be thus only composed from four vertical walls, two front walls in correspondence of the inlet **2** and the outlet **14** of the oven and two side walls accessible by the operators, plus the horizontal one of the roof.

The above disclosure shows that the invention fulfils the intended objects.

The oven according to the invention is susceptible of a number of changes and variants, within the inventive concept as disclosed in the appended claims.

As an example, even if for clarity in the attached drawings only two baking chambers have been illustrated, it is understood that in the industrial applications ovens with more rooms, and relative accessories, can be realized according to the desired baking diagram and productivity, without departing from the scope of protection determined by the terms of the attached claims.

## Claims

1. An apparatus for baking in continuous food products (**P**), comprising:
- an oven with an inlet (**2**) for the food products (**P**) to be baked, a plurality of baking chambers (**5**), an outlet (**14**) for the baked food products (**P**) and means (**3**, **16**) for conveying the food products (**P**) from said inlet (**2**) to said outlet (**14**), said oven being of the tunnel type with said baking chambers (**5**) disposed in sequence along said conveying means (**3**, **16**);
- means for thermally insulating said oven;
**characterized in that** said thermally insulating means comprise a box-like structure (**4**) placed externally to the oven and spaced apart therefrom for insulating from the outer environment said baking chambers (**5**) and said conveying means (**3**, **16**) thereof, said box-like structure (**4**) comprising means (**10**, **15**, **17**) for accessing to said baking chambers (**5**) and/or to said conveying means (**3**, **16**) by at least one operator for cleaning and/or maintaining thereof, said accessing means (**10**, **15**, **17**) including at least one first side wall of said box-like structure (**4**) faced to the oven and being sufficiently spaced apart from the oven to define a first interspace (**15**) accessible from the outside of said box-like structure (**4**) by the operator, said first interspace (**15**) defining a lateral corridor or passage for the walking and the movement of the operator, thus simplifying the action thereof on said baking chambers (**5**) and/or said conveying means (**3**, **16**).

2. Apparatus according to claim 1, wherein said means (**10**, **15**, **17**) for accessing to said baking chambers (**5**) and/or to said conveying means (**3**, **16**) are shaped and/or sized to allow the lateral access thereto by the operator.

3. Apparatus according to claim 1 or 2, wherein said at least one first side wall has a distance from said oven comprised between 35 cm and 150 cm, preferably comprised between 40 cm and 100 cm and still more preferably comprised between 50 cm and 80 cm.

4. Apparatus according to claim 1, 2 or 3, wherein each of said baking chambers (**5**) has at least one openable and/or removable lateral door for accessing internally thereto by the operator.

5. Apparatus according to one or more of the preceding claims, wherein said means (**10**, **15**, **17**) for accessing to said baking chambers (**5**) and/or to said conveying means (**3**, **16**) comprise at least one opening (**17**) in said at least one first side wall shaped and/or sized to allow the passage of the operator and to allow the access thereof to said first interspace (**15**) from the outside of said box-like structure (**4**).

6. Apparatus according to claim 5, wherein said at least one opening (**17**) comprises an access door (**10**) thermally insulated.

7. Apparatus according to claim 6, wherein said door (**10**) is openable/closeable by a safety lock commandable by a special key (**12**) exclusively held by the operator, so as to avoid the accidental access of strangers to said interspace.

8. Apparatus according to claim 6 or 7, wherein said door (**10**) is free of steps or obstacles in correspondence of the floor in order to facilitate the cleaning operations.

9. Apparatus according to claim 6, 7 or 8, wherein said access door (**10**) has an optically transparent inspection window (**11**).

10. Apparatus according to claim 9, wherein at least one of said baking chambers (**5**) has an opening (**9**) in correspondence of said inspection window (**11**) for monitoring the food products (**P**) inside of the oven during baking.

11. Apparatus according to one or more of the preceding claims, wherein said box-like structure (**4**) comprises a support frame anchored on the ground to which a plurality of insulating panels are connected.

12. Apparatus according to one or more of the preceding claims, wherein said box-like structure (**4**) has an inlet downwardly placed with respect to the inlet of said oven and an outlet upwardly placed with respect to the outlet of said oven in order to allow the load of the food products (**P**) to be baked and the unload of the baked food products (**P**) from the outside of the box-like structure (**4**).

13. Apparatus according to one or more of the preceding claims, wherein said box-like structure (**4**) has a second side wall opposed to said first side wall faced to the oven and spaced apart therefrom to define therebetween a second interspace having one or more of the features of said first interspace (**15**).

## Patentansprüche

1. Vorrichtung zum kontinuierlichen Backen von Backwaren (P), umfassend:
- einen Ofen mit einem Einlass (2) für die zu backenden Backwaren (P), eine Mehrzahl von Backkammern (5), einen Auslass (14) für die gebackenen Backwaren (P) und Mittel (3, 16) zum Transportieren der Backwaren (P) von dem Einlass (2) zu dem Auslass (14), wobei der Ofen vom Tunneltyp ist mit der Reihe nach entlang der Transportmittel (3, 16) angeordneten Backkammern (5);
- Mittel zum thermischen Isolieren des Ofens;
**dadurch gekennzeichnet**, dassdie thermischen Isoliermittel eine kastenartige Struktur (4) umfassen, die außerhalb des Ofens und davon beabstandet angeordnet ist, um die Backkammern (5) und die Transportmittel (3, 16) von der äußeren Umgebung zu isolieren, wobei die kastenartige Struktur (4) Mittel (10, 15, 17) zum Zugang zu den Backkammern (5) und/oder den Transportmitteln (3, 16) durch mindestens eine Bedienperson zum Reinigen und/oder Instandhalten derselben umfasst, wobei die Zugangsmittel (10, 15, 17) wenigstens eine gegenüber dem Ofen angeordnete und ausreichend vondem Ofen beabstandete erste Seitenwand der kastenartigen Struktur (4) umfassen um einen von außerhalb der kastenartigen Struktur (4) durch die Bedienperson zugänglichen ersten Zwischenraum (15) zu schaffen, wobei der erste Zwischenraum (15) einen seitlichen Korridor oder Passage zum Laufen und Bewegen der Bedienperson definiert, wodurch die Tätigkeiten derselben an den Backkammern (5) und/oder den Transportmitteln (3, 16) vereinfacht werden.

2. Vorrichtung nach Anspruch 1, wobei die Mittel (10, 15, 17) zum Zugang zu den Backkammern (5) und/oder den Transportmitteln (3, 16) geformt und/oder bemessen sind um einen seitlichen Zugang dazu durch die Bedienperson zu ermöglichen.

3. Vorrichtung nach Anspruch 1 oder 2, wobei die wenigstens eine Seitenwand einen Abstand von dem Ofen zwischen 35 cm und 150 cm umfasst, vorzugsweise zwischen 40 cm und 100 cm umfasst und insbesondere bevorzugt zwischen 50 cm und 80 cm umfasst.

4. Vorrichtung nach Anspruch 1, 2 oder 3, wobei jede der Backkammern (5) wenigstens eine zu öffnende und/oder zu entfernte seitliche Tür für einen internen Zugriff dazu durch die Bedienperson aufweist.

5. Vorrichtung nach einem oder mehreren der vorherigen Ansprüche, wobei die Mittel (10, 15, 17) zum Zugang zu den Backkammern (5) und/oder den Transportmitteln (3, 16) wenigstens eine Öffnung (17) in der wenigstens einen ersten Seitenwand umfasst, geformt und/oder bemessen um einen Zugang von der Bedienperson zu dem ersten Zwischenraum (15) von außerhalb der kastenartigen Struktur (4) zu ermöglichen.

6. Vorrichtung nach Anspruch 5, wobei die wenigstens eine Öffnung (17) eine thermisch isolierte Zugangstür (10) umfasst.

7. Vorrichtung nach Anspruch 6, wobei die Tür (10) durch ein Sicherheitsschloss zu öffnen/schließen ist, betätigbar durch einen nur der Bedienperson verfügbaren Spezialschlüssel (12), um einen unbeabsichtigten Zugang von Fremden zu dem Zwischenraum zu verhindern.

8. Vorrichtung nach Anspruch 6 oder 7, wobei die Tür (10) frei von Stufen oder Hindernissen in Bezug auf den Boden ist um eine Reinigung zu erleichtern.

9. Vorrichtung nach Anspruch 6, 7 oder 8, wobei die Zugangstür (10) ein optisch transparentes Inspektionsfenster (11) aufweist.

10. Vorrichtung nach Anspruch 9, wobei wenigstens eine von den Backkammern (5) eine mit dem Inspektionsfenster (11) korrespondierende Öffnung (9) aufweist, zum Überwachen der Backwaren (P) innerhalb des Ofens während des Backens.

11. Vorrichtung nach einem oder mehreren der vorherigen Ansprüche, wobei die kastenartige Struktur (4) einen am Boden verankerten Stützrahmenumfasst, an welchem eine Mehrzahl von isolierenden Platten angebracht sind.

12. Vorrichtung nach einem oder mehreren der vorherigen Ansprüche, wobei die kastenartige Struktur (4) einen abwärts mit Bezug auf den Einlass von dem Ofen angeordneten Einlass und einen aufwärts mit Bezug auf den Auslass von dem Ofen angeordneten Auslass aufweist, um ein Beladen von zu backenden Backwaren (P) und ein Entladen von gebackenen Backwaren (P) von außerhalb der kastenartigen Struktur (4) zu ermöglichen.

13. Vorrichtung nach einem oder mehreren der vorherigen Ansprüche, wobei die kastenartige Struktur (4) gegenüber der ersten Seitenwand eine gegenüber dem Ofen angeordnete und ausreichend von dem Ofen beabstandete zweite Seitenwand aufweist, um dazwischen einen zweiten Zwischenraum zu schaffen mit einem oder mehreren Merkmalen des ersten Zwischenraums (15).

## Revendications

1. Appareil pour la cuisson en continu de produits alimentaires (P), comprenant :
- un four avec une entrée (2) pour les produits alimentaires (P) destinés à être cuits, une pluralité de chambres de cuisson (5), une sortie (14) pour les produits alimentaires cuits (P) et des moyens (3, 16) pour transporter les produits alimentaires (P) de ladite entrée (2) à ladite sortie (14), ledit four étant du type tunnel avec lesdites chambres de cuisson (5) disposées en séquence le long desdits moyens de transport (3, 16) ;
- des moyens pour thermiquement isoler ledit four ;
**caractérisé en ce que** lesdits moyens thermiquement isolants comprennent une structure en forme de boîtier (4) placée extérieurement au four et espacée de celui-ci pour isoler, de l'environnement extérieur, lesdites chambres de cuisson (5) et lesdits moyens de transport (3, 16) de celui-ci, ladite structure en forme de boîtier (4) comprenant des moyens (10, 15, 17) pour l'accès auxdites chambres de cuisson (5) et/ou auxdits moyens de transport (3, 16) par au moins un opérateur pour le nettoyage et/ou l'entretien de ceux-ci, lesdits moyens d'accès (10, 15, 17) incluant au moins une première paroi latérale de ladite structure en forme de boîtier (4) tournée vers le four et étant suffisamment espacée du four pour définir un premier espace intermédiaire (15) auquel l'opérateur peut accéder à partir de l'extérieur de ladite structure en forme de boîtier (4), ledit premier espace intermédiaire (15) définissant un couloir ou passage latéral où l'opérateur peut marcher et se déplacer, ainsi simplifiant son action sur lesdites chambres de cuisson (5) et/ou lesdits moyens de transport (3, 16).

2. Appareil selon la revendication 1, dans lequel lesdits moyens (10, 15, 17) pour accéder auxdites chambres de cuisson (5) et/ou auxdits moyens de transport (3, 16) sont formés et/ou dimensionnés pour permettre à l'opérateur d'y accéder latéralement.

3. Appareil selon la revendication 1 ou 2, dans lequel ledit au moins une première paroi latérale présente une distance dudit four comprise entre 35 cm et 150 cm, de préférence comprise entre 40 cm et 100 cm et de façon préférée entre toutes comprise entre 50 cm et 80 cm.

4. Appareil selon la revendication 1, 2 ou 3, dans lequel chacune desdites chambres de cuisson (5) possède au moins une porte latérale ouvrable et/ou amovible pour que l'opérateur y accède intérieurement.

5. Appareil selon une ou plusieurs des revendications précédentes, dans lequel lesdits moyens (10, 15, 17) pour accéder auxdites chambres de cuisson (5) et/ou auxdits moyens de transport (3, 16) comprennent au moins une ouverture (17) dans ladite au moins une première paroi latérale, formée et/ou dimensionnée pour permettre le passage de l'opérateur et pour permettre son accès audit premier espace intermédiaire (15) à partir de l'extérieur de ladite structure en forme de boîtier (4).

6. Appareil selon la revendication 5, dans lequel ladite au moins une ouverture (17) comprend une porte d'accès (10) thermiquement isolée.

7. Appareil selon la revendication 6, dans lequel ladite porte (10) peut être ouverte/fermée par un verrou de sécurité pouvant être commandé par une clef spéciale (12) exclusivement détenue par l'opérateur, afin d'éviter l'accès accidentel d'étrangers audit espace intermédiaire.

8. Appareil selon la revendication 6 ou 7, dans lequel ladite porte (10) est dépourvue de marches ou d'obstacles en correspondance du plancher afin de faciliter les opérations de nettoyage.

9. Appareil selon la revendication 6, 7 ou 8, dans lequel ladite porte d'accès (10) possède une fenêtre d'inspection optiquement transparente (11).

10. Appareil selon la revendication 9, dans lequel au moins l'une desdites chambres de cuisson (5) possède une ouverture (9) en correspondance de ladite fenêtre d'inspection (11) pour surveiller les produits alimentaires (P) à l'intérieur du four durant la cuisson.

11. Appareil selon une ou plusieurs des revendications précédentes, dans lequel ladite structure en forme de boîtier (4) comprend un cadre de support ancré sur le sol auquel une pluralité de panneaux isolants sont raccordés.

12. Appareil selon une ou plusieurs des revendications précédentes, dans lequel ladite structure en forme de boîtier (4) possède une entrée placée vers le bas par rapport à l'entrée dudit four et une sortie placée vers le haut par rapport à la sortie dudit four afin de permettre le chargement des produits alimentaires (P) destinés à être cuits et le déchargement des produits alimentaires cuits (P) à partir de l'extérieur de la structure en forme de boîtier (4).

13. Appareil selon une ou plusieurs des revendications précédentes, dans lequel ladite structure en forme de boîtier (4) possède une seconde paroi latérale opposée à ladite première paroi latérale, tournée vers le four et espacée de celui-ci pour définir entre ceux-ci un second espace intermédiaire possédant une ou plusieurs des caractéristiques dudit premier espace intermédiaire (15).
